# EUROPEAN PATENT APPLICATION

(11) **EP 2 924 617 A1**
(43) Date of publication of application: **30.09.2015**
(21) Application number: 15158691.4
(22) Date of filing: 11.03.2015
(51) Int. Cl.: G06K 19/06

(54) **Method, apparatus, storage medium, and coding scheme for data storage using amplitude modulation**

(30) Priority: 24.03.2014 EP 14305417
(71) Applicant: Thomson Licensing, 92130 Issy-les-Moulineaux (FR)
(72) Inventor: Huetter, Ingo, 30982 Pattensen (DE); Blawat, Meinolf, 30659 Hannover (DE); Chen, Xiaoming, 30659 Hannover (DE); Gaedke, Klaus, 30659 Hannover (DE)
(74) Representative: Schmidt-Uhlig, Thomas

(57) **Abstract**

A method and an apparatus for encoding data as a two-dimensional array (3) of pixels, as well as a method and an apparatus for decoding such data are described. Data bits for encoding are received (10) via an input (21). An encoder (22) determines (11) blocks of pixels corresponding to the received data bits from an alphabet of allowed blocks of pixels. Each allowed block of pixels represents two or more data bits. Values of the pixels within each block of pixels in said alphabet are selected from three or more allowed values and increase continuously from a lowest value of a first pixel to a highest value of a last pixel when considering the pixels along a spiral or represent a plane having an orientation and an inclination. The blocks of pixels determined for the data bits are combined (12) into a two-dimensional array (3) of pixels. For decoding a pixel analyzer (44) determines (33) properties of pixel values of each retrieved block of pixels. A property analyzer (45) then determines (34) data bits for each retrieved block of pixels from the determined properties.

## Description

### FIELD OF THE INVENTION

The invention relates to a method and an apparatus for coding data and for storing the encoded data as a data pattern on a storage medium, as well as to a storage medium comprising a data pattern coded in accordance with said coding scheme. The invention further relates to a method and an apparatus for reading data encoded as a data pattern from a storage medium and for decoding the encoded data.

### BACKGROUND OF THE INVENTION

For storage or transmission of digital data, different modulation schemes have been developed in the past. Typical modulation schemes like amplitude modulation (AM), phase modulation (PM), or quadrature amplitude modulation (QAM) are designed for statistically stationary noise like additive white Gaussian noise. Signal constellation diagrams of these modulation schemes are symmetric. However, in the presence of severe local distortions, such modulation schemes fail for correct detection.

One of the most commonly used modulation schemes for storing or transmitting digital data is the amplitude modulation. In the baseband, amplitude modulation may be one dimensional, e.g. signal on a wire, or two dimensional, e.g. signal on a surface like film. If modulated on a carrier, two amplitude modulations can be combined to form a quadrature amplitude modulation.

A known application of amplitude modulation is long term data archival based on data storage on a two-dimensional surface, e.g. on film or paper. Typically the data are recorded in the form of two-dimensional data patterns consisting of an array of black and white pixels. However, also grey value or color coded pixel arrays are used.

More generally, the data are stored on a two-dimensional surface with pattern elements forming a regular pattern. A specific value is assigned to each element during an encoding process, e.g. a color, a grey value etc. If one pattern element shall store one bit, one of only two possible values is assigned to the pattern element, e.g. the values black and white. The easiest way of decoding the bit stored in a pattern element is to look at the element and to check its value, e.g. if the element is black or white. The described system, especially if only two grey levels are used, can handle a rather strong level of noise. Unfortunately, in case of severe local distortions with high amplitudes, e.g. due to dust, it is likely to fail.

### SUMMARY OF THE INVENTION

It is an object of the present invention to propose an improved solution for encoding data as a two-dimensional array of pixels.

According to a first aspect of the invention, a method for encoding data as a two-dimensional array of pixels comprises:
- receiving data bits for encoding;
- determining blocks of pixels corresponding to the received data bits from an alphabet of allowed blocks of pixels, each allowed block of pixels representing two or more data bits; and
- combining the determined blocks of pixels into a two-dimensional array of pixels
wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination.

Accordingly, an apparatus configured to encode data as a two-dimensional array of pixels comprises:
- an input configured to receive data bits for encoding; and
- an encoder configured to determine blocks of pixels corresponding to the received data bits from an alphabet of allowed blocks of pixels, each allowed block of pixels representing two or more data bits, and to combine the determined blocks of pixels into a two-dimensional array of pixels
wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination.

Also, a computer readable storage medium has stored therein instructions enabling encoding data as a two-dimensional array of pixels, which when executed by a computer, cause the computer to:
- receive data bits for encoding;
- determine blocks of pixels corresponding to the received data bits from an alphabet of allowed blocks of pixels, each allowed block of pixels representing two or more data bits; and
- combine the determined blocks of pixels into a two-dimensional array of pixels
wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination.

After encoding the two-dimensional array of pixels is preferably stored on a storage medium.

In one embodiment the values of the pixels within a block of pixels increase continuously from a lowest value of a first pixel to a highest value of a last pixel when considering the pixels along a spiral. The allowed blocks of pixels then differ in at least one of orientation of the spiral, location of the first pixel, and difference between the value of the first pixel and the value of the last pixel. Preferably, the continuous increase is a linear increase. During the decoding process the sequence of values is rotated until a majority of values lie on a straight line. The related code word can then be found by looking at the orientation, the number of rotations and the gradient of the line.

In another embodiment the values of the pixels within a block of pixels represent different planes. The allowed blocks of pixels then differ in at least one of inclination of the plane and orientation of the plane.

According to another aspect of the invention, a method for decoding data encoded as a two-dimensional array of pixels, the two-dimensional array of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, comprises:
- receiving the two-dimensional array of pixels for decoding;
- retrieving the blocks of pixels from the two-dimensional array of pixels;
- determining properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- determining data bits for each retrieved block of pixels from the determined properties.

Accordingly, an apparatus configured to decode data encoded as a two-dimensional array of pixels, the two-dimensional array of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, comprises:
- an input configured to receive the two-dimensional array of pixels for decoding;
- a data processor configured to retrieve the blocks of pixels from the two-dimensional array of pixels;
- a pixel analyzer configured to determine properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- a property analyzer configured to determine data bits for each retrieved block of pixels from the determined properties.

Also, a computer readable storage medium has stored therein instructions enabling decoding data encoded as a two-dimensional array of pixels, the two-dimensional array of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, the instructions, when executed by a computer, causing the computer to:
- receive the two-dimensional array of pixels for decoding;
- retrieve the blocks of pixels from the two-dimensional array of pixels;
- determine properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- determine data bits for each retrieved block of pixels from the determined properties.

The two-dimensional array of pixels is advantageously retrieved from a storage medium before decoding.

### BRIEF DESCRIPTION OF THE DRAWINGS

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.
- Fig. 1: shows an example of a two-dimensional amplitude modulated data pattern;
- Fig. 2: depicts an example of a retrieved data pattern;
- Fig. 3: shows an example of a two-dimensional data pattern coded in accordance with the coding scheme of the invention;
- Fig. 4: depicts a method according to the invention for encoding data and storing the encoded data on a storage medium;
- Fig. 5: illustrates an apparatus implementing the method of Fig. 4;
- Fig. 6: depicts a method according to the invention for reading encoded data from a storage medium and decoding the encoded data; and
- Fig. 7: illustrates an apparatus implementing the method of Fig. 6.

### DETAILED DESCRIPTION OF PREFERED EMBODIMENTS

In the following the invention shall be explained with reference to a two-dimensional array of grey value pixels, i.e. a coding scheme using two dimensional amplitude modulation. Of course, the concept can likewise be used for more complex modulations.

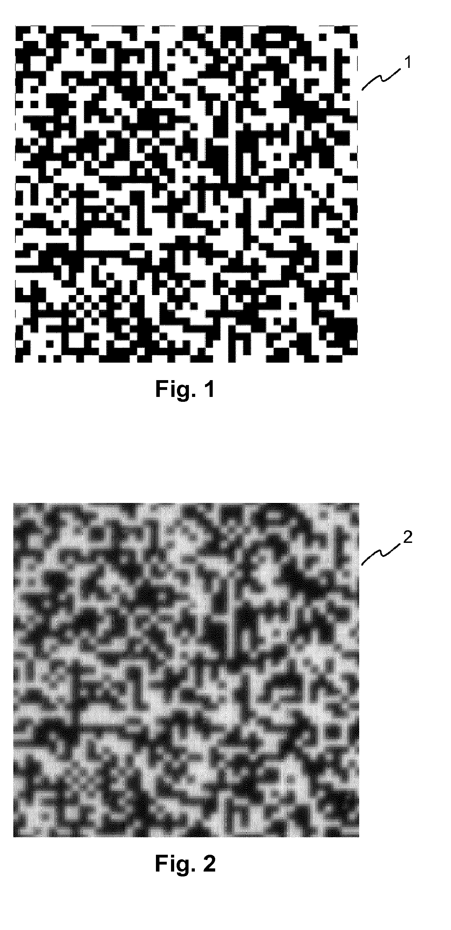

A two-dimensional amplitude modulation is used for storing data on surfaces, e.g. paper or film. In that case, the digital information is stored by printing or exposing specific patterns on the surface. These patterns typically consist of small squares having different grey values. An example of such a pattern 1, which is often called a data page, is shown in Fig. 1. In this example the single squares are black and white, where e.g. "black" stands for a "0" and white for a "1". Choosing only two grey values has the advantage that these patterns are quite insensible against distortions of the channel. The term channel here designates the influence of writing, storing and reading. While on the creation side only two grey levels are used, i.e. 0%="black" and 100%="white", on the reading side there will be a variety of grey levels due to noise, inter symbol interference, dust, scratches, etc. An example of a retrieved data pattern 2 is depicted in Fig. 2. The easiest way of decoding consists in checking if the grey level of a square is below or above 50% and to assign a "0" or a "1" to the square based on the result. The described system can handle a quite strong level of noise, especially if only two grey levels are used, but in case of severe local distortions with high amplitudes, e.g. due to dust, it is likely to fail. A white square, especially if surrounded by dark squares, darkened by more than 50% will be decoded as "0" instead of the correct "1".

In order to address this issue, a plurality of squares are combined to a symbol, which is encoded and decoded as a whole. In the above given example of Fig. 1, four squares can hold 4 bits. Choosing 2⁴=16 different patterns as the alphabet for the four-square-symbol, it is also possible to store 4 bits with this symbol. The alphabet patterns are chosen in such a way that they are well distinguishable and that decoding is still possible if single pixels or squares are strongly distorted. One possible set of patterns for a symbol consisting of 2×2 pixels is given below, where the values refer to the related grey levels, with "0" standing for "black" and "1" for "white":

| | | | | | | | |
|---|---|---|---|---|---|---|---|
| 0.00 | 0.33 | 1.00 | 0.00 | 0.67 | 1.00 | 0.33 | 0.67 |
| 1.00 | 0.67 | 0.67 | 0.33 | 0.33 | 0.00 | 0.00 | 1.00 |
| 0.33 | 0.00 | 0.00 | 1.00 | 1.00 | 0.67 | 0.67 | 0.33 |
| 0.67 | 1.00 | 0.33 | 0.67 | 0.00 | 0.33 | 1.00 | 0.00 |
| 0.25 | 0.42 | 0.75 | 0.25 | 0.59 | 0.75 | 0.42 | 0.59 |
| 0.75 | 0.59 | 0.59 | 0.42 | 0.42 | 0.25 | 0.25 | 0.75 |
| 0.42 | 0.25 | 0.25 | 0.75 | 0.75 | 0.59 | 0.59 | 0.42 |
| 0.59 | 0.75 | 0.42 | 0.59 | 0.25 | 0.42 | 0.75 | 0.25 |

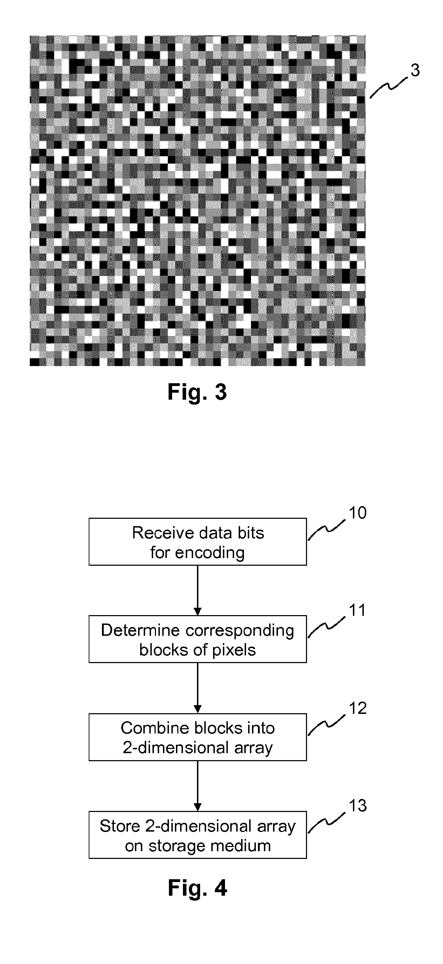

In principle these patterns form spirals with two different orientations, four different starting points, and two different amplitudes. A related example image 3 with the described modulation is shown in Fig. 3.

The set of values assigned to the patterns was chosen in such a way that, when ordering the values in a line taking them clockwise from the 2×2 pattern, the distance between the values of two neighbors is always the same when starting with the correct pixel. If necessary, the pattern needs to be rotated to start with the correct pixel. To give an example, the pattern

| | |
|---|---|
| 1.00 | 0.00 |
| 0.67 | 0.33 |

can also be written (when taking the values clockwise) as:
1.00 0.00 0.33 0.67

Rotating the sequence to the left gives:
0.00 0.33 0.67 1.00

In this example the distance between two adjacent values is always 0.33. In other words, the values lie on a straight line when displayed as a function.

If one pixel is strongly distorted, e.g.
0.00 0.91 0.67 1.00,
it is easily possible to find out which one is distorted, as the three others still lie on a line. In practice, small distortions can also be allowed for other pixels, as long as correct decisions can be made.

During the decoding process the sequence of values is rotated until a majority of values lie on a straight line. The related code word can then be found by looking at the orientation, the number of rotations and the gradient of the line.

Of course, the proposed solution is not limited to the case of 2×2 pixel patterns, nor is it mandatory that the values of adjacent pixels lie on a straight line. It is sufficient that the exact sequence of the pixel values of the pattern follows a known function.

An alternative solution making use of 2×2 pixel patterns consists in the following patterns:

| | | | | | | | |
|---|---|---|---|---|---|---|---|
| 0.0 | 0.0 | 1.0 | 1.0 | 0.0 | 1.0 | 0.0 | 0.5 |
| 0.0 | 0.0 | 1.0 | 1.0 | 0.0 | 1.0 | 0.0 | 0.5 |
| 0.5 | 1.0 | 0.0 | 0.0 | 0.0 | 0.0 | 0.5 | 0.5 |
| 0.5 | 1.0 | 1.0 | 1.0 | 0.5 | 0.5 | 1.0 | 1.0 |
| 1.0 | 0.0 | 1.0 | 0.5 | 0.5 | 0.0 | 1.0 | 1.0 |
| 1.0 | 0.0 | 1.0 | 0.5 | 0.5 | 0.0 | 0.0 | 0.0 |
| 1.0 | 1.0 | 0.5 | 0.5 | 0.0 | 1.0 | 1.0 | 0.0 |
| 0.5 | 0.5 | 0.0 | 0.0 | 1.0 | 0.0 | 0.0 | 1.0 |

These patterns essentially represent planes with different inclinations and orientations.

Fig. 4 schematically illustrates a method according to the invention for encoding data as a two-dimensional array 3 of pixels. After receiving 10 data bits for encoding, blocks of pixels corresponding to the received data bits are determined 11 from an alphabet of allowed blocks of pixels. Each allowed block of pixels represents two or more data bits. Values of the pixels within each block of pixels in said alphabet are selected from three or more allowed values and increase continuously from a lowest value of a first pixel to a highest value of a last pixel when considering the pixels along a spiral or represent a plane having an orientation and an inclination. The determined blocks of pixels are then combined 12 into a two-dimensional array 3 of pixels. The resulting two-dimensional array 3 of pixels is advantageously stored 13 on a storage medium.

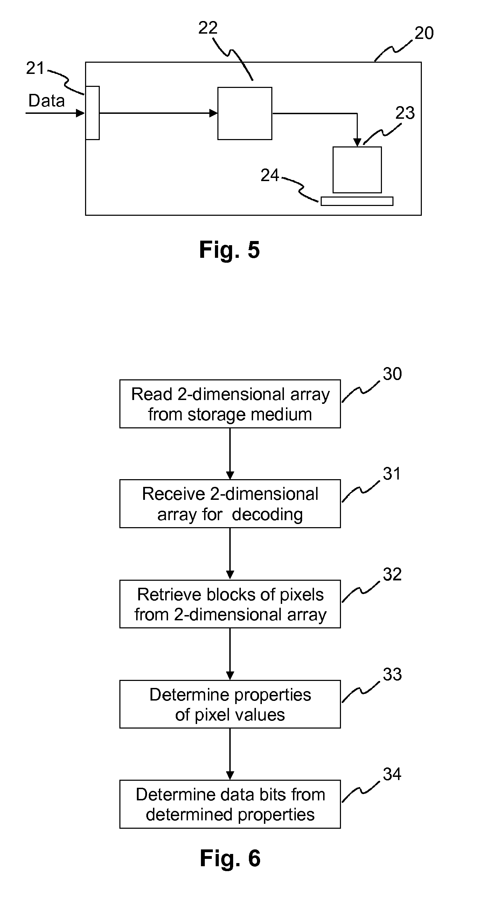

A corresponding apparatus 20 is shown in Fig. 5. The apparatus 20 has an input 21 for receiving 10 data bits for encoding. An encoder 22 determines 11 blocks of pixels corresponding to the received data bits from the alphabet of allowed blocks of pixels. The encoder 22 then combines 12 the determined blocks of pixels into a two-dimensional array 3 of pixels. Preferably, a storage unit 23 is provided for storing 13 the two-dimensional array 3 of pixels on a storage medium 24, e.g. on film or microfilm. Of course, the encoder 22 may likewise be implemented as software running on a processor.

A method according to the invention for decoding data encoded as a two-dimensional array 3 of pixels is schematically shown in Fig. 6. The two-dimensional array 3 of pixels consists of blocks of pixels from an alphabet of allowed blocks of pixels, where each allowed block of pixels represents two or more data bits. Values of the pixels within each block of pixels in said alphabet are selected from three or more allowed values and increase continuously from a lowest value of a first pixel to a highest value of a last pixel when considering the pixels along a spiral or represent a plane having an orientation and an inclination. In a first step a two-dimensional array 3 of pixels is preferably read 30 from a storage medium 24. After receiving 31 the two-dimensional array 3 of pixels for decoding the blocks of pixels are retrieved 32 from the two-dimensional array 3 of pixels. Then properties of pixel values of each retrieved block of pixels are determined 33. These properties comprise an orientation of said spiral, a location of the first pixel, and a difference between the value of the first pixel and the value of the last pixel, or an orientation of said plane and an inclination of said plane. Finally, data bits are determined 34 from the determined properties for each retrieved block of pixels.

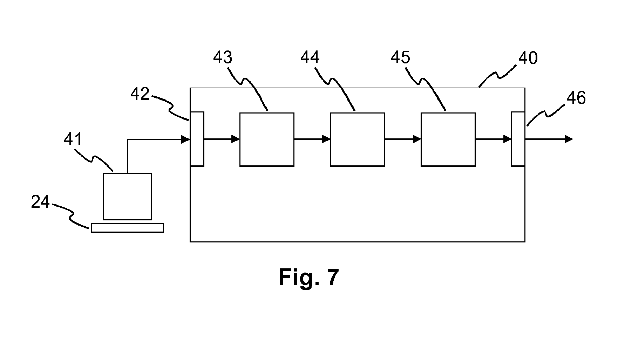

A corresponding apparatus 40 is depicted in Fig. 7. The apparatus has an input 42 for receiving 31 the two-dimensional array 3 of pixels for decoding, e.g. from a reading unit 41 inside or connected to the apparatus 40, which reads 30 the two-dimensional array 3 of pixels from a storage medium 24. A data processor 43 retrieves 32 the blocks of pixels from the two-dimensional array 3 of pixels. A pixel analyzer 44 then determines 33 properties of pixel values of each retrieved block of pixels. Finally, a property analyzer 45 determines 34 data bits for each retrieved block of pixels from the determined properties. Advantageously, the determined data bits are subjected to further processing inside the apparatus or made available via an output 46. Of course, the various units 43, 44, 45 of the apparatus may likewise be partially or fully combined into a single unit. Also, they may be partly or fully implemented as software running on a processor.

## Claims

1. A method for encoding data as a two-dimensional array (3) of pixels, the method comprising:
- receiving (10) data bits for encoding;
- determining (11) blocks of pixels corresponding to the received data bits from an alphabet of allowed blocks of pixels, each allowed block of pixels representing two or more data bits; and
- combining (12) the determined blocks of pixels into a two-dimensional array (3) of pixels;
**characterized in that** values of the pixels within each block of pixels in said alphabet are selected from three or more allowed values and increase continuously from a lowest value of a first pixel to a highest value of a last pixel when considering the pixels along a spiral or represent a plane having an orientation and an inclination.

2. The method according to claim 1, **wherein** the values of the pixels within the blocks of pixels are grey values or color values.

3. The method according to claim 1, **wherein** the values of the pixels within a block of pixels increase linearly.

4. The method according to claim 1, **wherein** the allowed blocks of pixels differ in at least one of orientation of the spiral, location of the first pixel, and difference between the value of the first pixel and the value of the last pixel.

5. The method according to claim 1, **wherein** the allowed blocks of pixels differ in at least one of orientation of the plane and inclination of the plane.

6. The method according to one of the preceding claims, **further** comprising storing (13) the two-dimensional array (3) of pixels on a storage medium (24).

7. An apparatus (20) configured to encode data as a two-dimensional array (3) of pixels, the apparatus (20) comprising:
- an input (21) configured to receive (10) data bits for encoding; and
- an encoder (22) configured to determine (11) blocks of pixels corresponding to the received data bits from an alphabet of allowed blocks of pixels, each allowed block of pixels representing two or more data bits, and to combine (12) the determined blocks of pixels into a two-dimensional array (3) of pixels
**characterized in that** values of the pixels within each block of pixels in said alphabet are selected from three or more allowed values and increase continuously from a lowest value of a first pixel to a highest value of a last pixel when considering the pixels along a spiral or represent a plane having an orientation and an inclination.

8. The apparatus (20) according to claim 7, **further** comprising a storage unit (23) configured to store (13) the two-dimensional array (3) of pixels on a storage medium (24).

9. A computer readable storage medium having stored therein instructions enabling encoding data as a two-dimensional array (3) of pixels, which when executed by a computer, cause the computer to:
- receive (10) data bits for encoding;
- determine (11) blocks of pixels corresponding to the received data bits from an alphabet of allowed blocks of pixels, each allowed block of pixels representing two or more data bits; and
- combine (12) the determined blocks of pixels into a two-dimensional array (3) of pixels;
**characterized in that** values of the pixels within each block of pixels in said alphabet are selected from three or more allowed values and increase continuously from a lowest value of a first pixel to a highest value of a last pixel when considering the pixels along a spiral or represent a plane having an orientation and an inclination.

10. The computer readable storage medium according to claim 9, **further** having stored therein instructions, which when executed by a computer, cause the computer to store (13) the two-dimensional array (3) of pixels on a storage medium (24).

11. A method for decoding data encoded as a two-dimensional array (3) of pixels, the two-dimensional array (3) of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, the method **comprising:**
- receiving (31) the two-dimensional array (3) of pixels for decoding;
- retrieving (32) the blocks of pixels from the two-dimensional array (3) of pixels;
- determining (33) properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- determining (34) data bits for each retrieved block of pixels from the determined properties.

12. The method according to claim 11, **further** comprising reading (30) the two-dimensional array (3) of pixels from a storage medium (24).

13. An apparatus (40) configured to decode data encoded as a two-dimensional array (3) of pixels, the two-dimensional array (3) of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, the apparatus (40) **comprising:**
- an input (42) configured to receive (31) the two-dimensional array (3) of pixels for decoding;
- a data processor (43) configured to retrieve (32) the blocks of pixels from the two-dimensional array (3) of pixels;
- a pixel analyzer (44) configured to determine (33) properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- a property analyzer (45) configured to determine (34) data bits for each retrieved block of pixels from the determined properties.

14. The apparatus (40) according to claim 13, **further** comprising a reading unit (41) configured to read (30) the two-dimensional array (3) of pixels from a storage medium (24).

15. A computer readable storage medium having stored therein instructions enabling decoding data encoded as a two-dimensional array (3) of pixels, the two-dimensional array (3) of pixels consisting of blocks of pixels from an alphabet of allowed blocks of pixels, each allowed block of pixels representing two or more data bits, wherein values of the pixels within each block of pixels in said alphabet are selected from three or more allowed values and increase continuously from a lowest value of a first pixel to a highest value of a last pixel when considering the pixels along a spiral or represent a plane having an orientation and an inclination, the instructions, when executed by a computer, causing the computer to:
- receive (31) the two-dimensional array (3) of pixels for decoding;
- retrieve (32) the blocks of pixels from the two-dimensional array (3) of pixels;
- determine (33) properties of pixel values of each retrieved block of pixels, wherein the determined properties comprise an orientation of said spiral, a location of the first pixel, and a difference between the value of the first pixel and the value of the last pixel, or an orientation of said plane and an inclination of said plane; and
- determine (34) data bits for each retrieved block of pixels from the determined properties.

16. The computer readable storage medium according to claim 15, **further** having stored therein instructions, which when executed by a computer, cause the computer to read (30) the two-dimensional array (3) of pixels from a storage medium (24).
